# EUROPÄISCHE PATENTSCHRIFT

(11) **EP 1 558 853 B1**
(45) Veröffentlichungstag und Bekanntmachung des Hinweises auf die Patenterteilung: **23.08.2006**
(21) Anmeldenummer: 03808270.7
(22) Anmeldetag: 24.10.2003
(51) Int. Cl.: F16B 39/02, F16B 39/38

(54) **GEWINDERING**
THREADED RING
BAGUE FILETEE

(30) Priorität: 07.11.2002 DE 10252780
(43) Veröffentlichungstag der Anmeldung: 03.08.2005
(73) Patentinhaber: Spieth-Maschinenelemente Gmbh & Co Kg, 73730 Esslingen (DE)
(72) Erfinder: METZGER, Heinz, 73230 Kirchheim (DE)
(74) Vertreter: Bartels, Martin Erich Arthur
(86) Internationale Anmeldenummer: PCT/EP2003/011777
(87) Internationale Veröffentlichungsnummer: WO 2004/042242

(56) Entgegenhaltungen:
- EP-A- 0 794 338
- DE-B- 1 675 685
- DE-C- 98 395

## Beschreibung

Die Erfindung bezieht sich auf einen Gewindering, gemäß der Merkmalsausgestaltung des Oberbegriffes des Patentanspruches 1.

Gewinderinge dieser Art, wie sie beispielsweise in der DE-Auslegeschrift 1 675 685 offenbart sind, sind handelsüblich und finden auf verschiedenen Gebieten des Maschinenbaus Anwendung. Der die Planfläche bildende Körperteil dient als auf einem Außengewinde einer Welle oder Spindel sitzende Genauigkeitsmutter, deren axiale Position mittels des als Sicherungsring dienenden zweiten Körperteiles exakt festlegbar ist, indem das zwischen Außengewinde und Innengewinde vorhandene Gewindeflankenspiel dadurch beseitigt wird, dass mittels der Betätigungseinrichtung die Weite des Spaltes zwischen beiden Körperteilen entsprechend verändert wird, was aufgrund der elastischen Nachgiebigkeit des die Körperteile verbindenden Wandteiles möglich ist. Als Betätigungseinrichtung können Spannschrauben vorgesehen sein, die ein gegenseitiges Verspannen von Stellring und Sicherungsring ermöglichen.

Der Stellring kann als Stellmutter dienen, deren Planfläche eine Anlagefläche zur Positionierung von Wälzlagern auf Wellen bildet oder als genau positionierter Wellenbund dienen kann oder dergleichen.

Bei dem bekannten Gewindering der eingangs genannten Art ist der Spalt zwischen den Körperteilen durch zwei in axialer Richtung zueinander versetzte Spaltabschnitte gebildet, von denen einer sich von der Gewindebohrung ausgehend bis in die Nähe des Umfanges des Gewinderinges erstreckt und der andere, von der Umfangsfläche ausgehend, radial nach innen bis in die Nähe der Gewindebohrung verläuft. Zwischen beiden Spaltabschnitten befindet sich der elastisch nachgiebige Wandteil, welcher die beiden Körperteile verbindet und dessen Wandstärke so gewählt ist, dass dieser Wandteil in der Weise elastisch nachgiebig ist, dass die Geometrie des Spaltes durch die als Betätigungseinrichtung dienenden Spannschrauben so eingestellt werden kann, dass durch Verspannen beider Körperteile das Gewindeflankenspiel beseitigt und die gewünschte Sicherungswirkung erreicht ist.

Nachteilig bei dem bekannten Gewindering ist der verhältnismäßig hohe Herstellungsaufwand.

Durch die EP 0 794 338 A1 ist ein gattungsgemäßer Gewindering bekannt, dessen mit Innengewinde versehener, einstückiger Körper zwei Körperteile aufweist, deren erster einen Stellring mit einer endseitigen, in einer Radialebene liegenden Planfläche bildet und deren zweiter Körperteil einen Sicherungsring bildet, der mit dem ersten Körperteil unter Bildung eines zwischen beiden Körperteilen befindlichen Spaltes über einen elastisch nachgiebigen Wandteil des Körpers verbunden ist und eine Betätigungseinrichtung aufweist, mittels deren die Geometrie des Spaltes aufgrund der elastischen Nachgiebigkeit des Wandteiles einstellbar ist, wobei der als Sicherungsring dienende zweite Körperteil zur Bildung des elastisch nachgiebigen Wandteiles einen Umfangsbereich aufweist, der gegenüber dem ersten Körperteil auf einen Außendurchmesser verringert ist, der auf einem kleineren Radius liegt als das radial außenliegende Ende des Spaltes, welches wiederum auf einem kleineren Radius liegt als der Umfang des ersten Körperteiles, und wobei der im Durchmesser verringerte Umfangsbereich des zweiten Körperteiles vom Spalt in einem axialen Abstand endet, der die Erstreckung des nachgiebigen Wandteiles in Axialrichtung definiert.

Ausgehend von diesem Stand der Technik liegt der Erfindung die Aufgabe zugrunde, die bekannten Gewindering-Lösungen unter Beibehalten ihrer Vorteile, nämlich zum Erhalt einer sicheren Festlegung von Bauteilen aneinander ein mögliches Gewindeflankenspiel zu beseitigen, derart weiter zu verbessern, dass sie einfach und kostengünstig herstellbar sind.

Bei einem Gewindering der vorstehend genannten Art ist diese Aufgabe erfindungsgemäß dadurch gelöst, dass der im Außendurchmesser verringerte Umfangsbereich des zweiten Körperteils durch eine kreiszylindrische Umfangsfläche gebildet ist, die sich vom endseitigen, an die Stirnfläche des zweiten Körperteils angrenzenden Rand durchgehend bis zum nachgiebigen Wandteil erstreckt, was durch einfache spanende Bearbeitung erfolgen kann, so dass die Herstellung des erfindungsgemäßen Gewinderinges insoweit wesentlich vereinfacht ist. Insbesondere hat sich die Herstellung einer vom Endrand ausgehenden Umfangsfläche als fertigungstechnisch äußerst einfach erwiesen. Der elastisch nachgiebige Wandteil ist nicht durch zwei gesonderte Spaltabschnitte gebildet, die den Wandteil zwischen sich begrenzen,
sondern dadurch, dass ein im Durchmesser verringerter Umfangsbereich ausgebildet ist, der in Axialrichtung in einem Abstand vom Spalt endet, dessen radial außenliegendes Ende auf einem größeren Radius liegt als der genannte Umfangsbereich, ergibt sich im Bereich der Stufe, die den im Durchmesser verringerten Umfangsbereich mit dem Umfang des ersten Körperteiles verbindet, ein an den Spalt angrenzender Wandteil mit einer Erstreckung in Axialrichtung, die dem Abstand zwischen Spalt und dem Ende des im Durchmesser verringerten Umfangsbereiches entspricht. Dieser, die Wandstärke des Wandteiles bestimmender Abstand ist so gewählt, dass sich für diesen Wandteil die erstrebte elastische Nachgiebigkeit ergibt.

An Stelle der Herstellung zweier Spaltabschnitte ist bei der erfindungsgemäßen Lösung zur Bildung des nachgiebigen Wandteiles lediglich die Ausbildung eines einteiligen Spaltes als Inneneinstich und die Außenbearbeitung des zweiten Körperteils erforderlich, um dessen Außendurchmesser bereichsweise zu verringern, was durch einfache spanende Bearbeitung erfolgen kann, so dass die Herstellung des erfindungsgemäßen Gewinderings wesentlich vereinfacht ist. Als zusätzlicher Vorteil kommt hinzu, dass am Gewindering kein nach außen offener Spaltabschnitt vorhanden ist, der erfindungsgemäße Gewindering also eine geschlossene Umfangskontur besitzt. Unter anderem ist dadurch die Gefahr vermieden, dass sich im Betrieb Fremdstoffe in dem am Umfang offenen Spaltbereich ablagern könnten, etwa in Schmierstoffen enthaltene Verunreinigungen, Abriebpartikel, Späne oder dergleichen, was am Umfang des Gewinderinges zur Bildung einer Unwuchtmasse führen könnte.

Die Betätigungseinrichtung zur Veränderung der Geometrie des Spaltes kann in an sich bekannter Weise Spannschrauben aufweisen, die auf einem koaxialen Teilkreis gleichmäßig angeordnet sind, den Spalt achsparallel durchgreifen und sich mit ihren Schraubenköpfen am zweiten Körperteil abstützen.
Nachstehend ist die Erfindung anhand eines in der Zeichnung dargestellten Ausführungsbeispieles im einzelnen erläutert. Es zeigen:
- Fig. 1 einen nur halbseitig dargestellten Längsschnitt eines Ausführungsbeispieles des erfindungsgemäßen Gewinderinges auf einer Gewindespindel, wobei im Interesse der leichten Erkennbarkeit des Funktionsprinzips die Darstellung schematisch vereinfacht und insbesondere das Gewindeflankenspiel vergrößert gezeichnet ist und sich der Gewindering im ungesicherten Zustand befindet, und
- Fig. 2 eine der Fig. 1 entsprechende Darstellung, wobei jedoch der aufgeschraubte Gewindering im gesicherten Zustand gezeigt ist.

Der in den Fig. dargestellte Gewindering weist zwei Hauptteile auf, nämlich einen ersten Körperteil 1, der als Stellring oder Stellmutter dient, und einen zweiten Körperteil 3, der einen Sicherungsring bildet. Beide Körperteile 1 und 3 sind mit durchgehendem Innengewinde 5 versehen, mit dem sie auf einen mit Außengewinde 7 versehenen Abschnitt einer Spindel 9 aufgeschraubt sind. Der Körperteil 1 weist eine endseitige Planfläche 11 auf, die als Anlagefläche zur Lagefixierung eines Ringkörpers 13 dient, der als Wellenbund auf der Spindel 9 sitzt.

Zwischen den beiden Körperteilen 1 und 3 befindet sich ein Spalt 15, der sich, vom Innengewinde 5 ausgehend, in radialer Richtung erstreckt und dessen radial äußeres Ende 17 sich in einem radialen Abstand vom Umfang 19 des ersten Körperteiles 1 befindet. Der zweite Körperteil 3 weist einen Umfangsbereich 21 auf, der einen kleineren Außendurchmesser besitzt als der Umfang 19 des ersten Körperteiles 1. Dieser im Durchmesser verringerte Umfangsbereich 21 erstreckt sich vom endseitigen Rand 23, der an die Stirnfläche 25 des zweiten Körperteiles 3 angrenzt, in Axialrichtung bis in die Nähe des Spaltes 15. Die den Umfangsbereich 21 mit dem Umfang 19 des ersten Körperteiles 1 verbindende Stufe 27 begrenzt zusammen mit dem Spalt 15 einen Wandteil 29, über den erster Körperteil 1 und zweiter Körperteil 3 einstückig miteinander zusammen hängen. Die Wandstärke dieses Wandteiles 29, die durch den Abstand zwischen dem Spalt 15 und dem axial innenliegenden Ende des Umfangsbereiches 21 bestimmt ist, ist so gewählt, dass der Wandteil 29 eine "Schwachstelle" bildet, also einen nachgiebigen Wandteil darstellt, der bei aus Stahlwerkstoff hergestelltem Gewindering eine elastische Lageeinstellung des zweiten Körperteiles 3 relativ zum ersten Körperteil 1 ermöglicht, wobei eine entsprechende Einstellung der Geometrie des Spaltes 15 vorgenommen wird, beispielsweise die Spaltweite örtlich verändert wird.

Als Betätigungseinrichtung zur Einstellung der Geometrie des Spaltes 15 sind Spannschrauben 31 vorgesehen, die den Spalt 15 achsparallel durchgreifen, in Gewindebohrungen 33 des ersten Körperteiles 1 eingreifen und mit ihren Schraubenköpfen 35 am zweiten Körperteil 3 abgestützt sind. Die Spannschrauben 31 sind auf einem zur Achse des Gewinderinges konzentrischen Teilkreis gleichmäßig verteilt angeordnet, wobei beispielsweise sechs Spannschrauben vorgesehen sind. Beim vorliegenden Beispiel sind die Spannschrauben 31 als Innensechskantschrauben ausgebildet, deren Köpfe 35 in einem erweiterten Endabschnitt einer zugehörigen Durchgangsbohrung 37 so versenkt aufgenommen sind, dass die Köpfe 35 im wesentlichen mit der äußeren Stirnfläche 25 des zweiten Körperteiles 3 bündig sind.

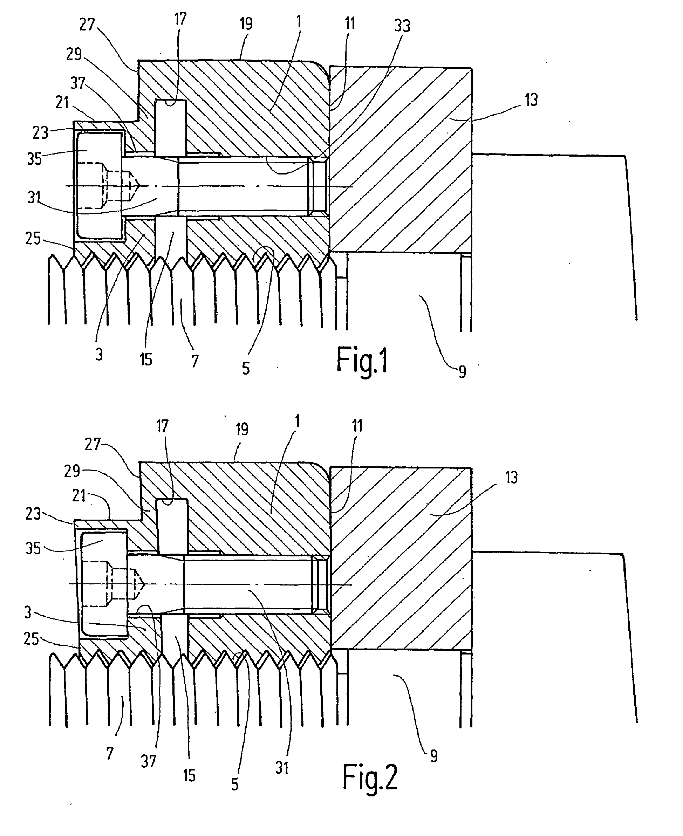

Fig. 1 zeigt den ungesicherten Zustand des Gewinderinges, wobei ein vorhandenes Gewindeflankenspiel des Gewindeeingriffes zwischen Innengewinde 5 und Außengewinde 7 zur Verdeutlichung vergrößert eingezeichnet ist. Wie zu ersehen ist, befinden sich hierbei die in der Zeichnung rechtsseitig gelegenen Flankenflächen des Innengewindes 5 in einem Abstand von den in der Zeichnung linksseitig gelegenen Flankenflächen des Außengewindes 7.

Fig. 2 zeigt den gesicherten Zustand, bei dem durch Betätigen der Spannschrauben 31 der zweite Körperteil 3 gegen den ersten Körperteil 1 so verspannt ist (in übertriebener Darstellung durch leichte Schrägstellung der Stirnfläche 25 des Körperteiles 3 gegenüber der Endfläche der Schraubenköpfe 35 verdeutlicht), dass beim zweiten Körperteil 3 die rechtsseitig gelegenen Flankenflächen des Innengewindes 5 sich an den Flankenflächen des Außengewindes 7 abstützen, während sich beim ersten Körperteil 1 die linksseitig gelegenen Flankenflächen des Innengewindes 5 am Außengewinde 7 abstützen, so dass die aus miteinander verspannten Körperteilen 1 und 3 gebildete Einheit des Gewinderinges gesichert ist.

Der erfindungsgemäße Gewindering ist rotationssymetrisch aufgebaut und weist keine Unwucht erzeugende Nuten, Schlitze usw. auf. Die auf einem konzentrischen Teilkreis gleichmäßig verteilten Spannschrauben 31 ergeben in Zusammenwirkung mit der nachgiebigen Auslegung des Wandteiles 29 gleichmäßige Klemmkräfte am Gewinde. Diese Klemmkräfte sorgen für einen intensiven Kontakt an den Gewindeflanken von Innen- und Außengewinde 5 bzw. 7 und demzufolge für eine hohe axiale Steifigkeit des Gewinderings am gesamten Umfang. Gegebenenfalls vorhandene geringe Formfehleranpassungen und Oberflächenverdichtungen können bei der Montage durch ein verstärktes Verspannen der Körperteile 1 und 3 ausgeglichen werden. Die Planfläche 11 des als Stellring oder Stellmutter dienenden ersten Körperteiles 1 kann durch gezielt vorgenommenes und gleichmäßiges Anziehen der Spannschrauben 31 bis zur vollständigen Schlagfreiheit ausgerichtet werden. Wenn erforderlich, ist es durch individuelles Nachziehen der Spannschrauben 31 möglich, einseitige Spannungen, verursacht durch kleinste Planlauffehler der anliegenden Teile, auszugleichen.

Wie erwähnt, definiert die gegenseitige Lagebeziehung zwischen Spalt 15 und dem axial inneren Ende des im Durchmesser verringerten Umfangsbereiches 21 am zweiten Körperteil 3 die Wandstärke des elastisch nachgiebigen Wandteiles 29. Die Ausbildung des Umfangsbereiches 21 ist herstellungstechnisch äußerst einfach. Der Grad der Nachgiebigkeit des Wandteiles 29 bestimmt sich auch durch den Abstand des radial äußeren Endes 17 des Spaltes 15 vom Umfang 19 des ersten Körperteiles 1. Dieser radiale Abstand ist fertigungstechnisch problemlos durch Wahl der Einstichtiefe des den Spalt 15 bildenden Inneneinstiches festlegbar.

## Patentansprüche

1. Gewindering, dessen mit Innengewinde (5) versehener, einstückiger Körper zwei Körperteile (1 und 3) aufweist, deren erster einen Stellring mit einer endseitigen, in einer Radialebene liegenden Planfläche (11) bildet und deren zweiter Körperteil (3) einen Sicherungsring bildet, der mit dem ersten Körperteil (1) unter Bildung eines zwischen beiden Körperteilen (1 und 3) befindlichen Spaltes (15) über einen elastisch nachgiebigen Wandteil (29) des Körpers verbunden ist und eine Betätigungseinrichtung (31) aufweist, mittels deren die Geometrie des Spaltes (15) aufgrund der elastischen Nachgiebigkeit des Wandteiles (29) einstellbar ist, wobei der als Sicherungsring dienende zweite Körperteil (3) zur Bildung des elastisch nachgiebigen Wandteiles (29) einen Umfangsbereich (21) aufweist, der gegenüber dem ersten Körperteil (1) auf einen Außendurchmesser verringert ist, der auf einem kleineren Radius liegt als das radial außenliegende Ende (17) des Spaltes (15), welches wiederum auf einem kleineren Radius liegt als der Umfang (19) des ersten Körperteiles (1), und wobei der im Durchmesser verringerte Umfangsbereich (21) des zweiten Körperteils (3) vom Spalt (15) in einem axialen Abstand endet, der die Erstreckung des nachgiebigen Wandteiles (29) in Axialrichtung definiert, **dadurch gekennzeichnet, dass** der im Außendurchmesser verringerte Umfangsbereich (21) des zweiten Körperteiles (3) durch eine kreiszylindrische Umfangsfläche gebildet ist, die sich vom endseitigen, an die Stirnfläche (25) des zweiten Körperteils (3) angrenzenden Rand (23) durchgehend bis zum nachgiebigen Wandteil (29) erstreckt.

2. Gewindering nach Anspruch 1, **dadurch gekennzeichnet, dass** die Betätigungseinrichtung mehrere eine Veränderung der Weite des Spaltes (15) an ausgewählten Stellen ermöglichende Spannmittel (31) aufweist.

3. Gewindering nach Anspruch 2, **dadurch gekennzeichnet, dass** als Spannmittel Spannschrauben (31) vorgesehen sind, die auf einem koaxialen Teilkreis gleichmäßig angeordnet sind, den Spalt (15) achsparallel durchgreifen und sich mit ihren Schraubenköpfen (35) am zweiten Körperteil (3) abstützen.

4. Gewindering nach Anspruch 3, **dadurch gekennzeichnet, dass** die Schraubenköpfe (35) der Spannschrauben (31) in der Stirnfläche (25) des zweiten Körperteiles (3) versenkt aufgenommen sind.

5. Gewindering nach Anspruch 4, **dadurch gekennzeichnet, dass** als Spannschrauben Innensechskantschrauben (31) vorgesehen sind, deren in der Stirnfläche (25) versenkte Schraubenköpfe (35) im wesentlichen mit der Stirnfläche (25) bündig sind.

## Claims

1. Threaded ring, the single-piece body equipped with internal threads (5) of which comprises two body parts (1 and 3), the first of which forms an adjustment ring with an end side planar surface (11) lying on a radial plane, and the second body part (3) of which forms a securing ring, which is connected with the first body part (1) to form a gap (15) between the two body parts (1 and 3) by means of an elastically yielding wall part (29) of the body, and an activating means (31), with which the geometry of the gap (15) can be adjusted thanks to the elastic yielding of the wall part (29), whereby the second body part (3) serving as the securing ring comprises a circumference area (21) for forming the elastically yielding wall part (29), which has a reduced outer diameter in comparison with the first body part (1) which lies on a smaller radius than the radial outer end (17) of the gap (15), which in turn lies on a smaller radius than the circumference (19) of the first body part (1), and whereby the circumference area (21) with the reduced diameter of the second body part (3) of the gap (15) ends at an axial distance that defines the expansion of the yielding wall part (29) in an axial direction, **characterised in that** the circumference area (21) with the reduced outer diameter of the second body part (3) is formed by an annular cylindrical circumference area that extends from the end side edge (23) following the facing side (25) of the second body part (3) to the yielding wall part (29).

2. Threaded ring according to Claim 1, **characterised in that** the activating means comprises several tensioning screws (31) enabling a change of the width of the gap (15) at selected positions.

3. Threaded ring according to Claim 2, **characterised in that** tensioning screws (31) are envisaged as tensioning means, which are evenly distributed across a coaxial semi-circle, engaging the gap (15) parallel to the axis, and are supported on the second body part (3) with their screw heads (35).

4. Threaded ring according to Claim 3, **characterised in that** the screw heads (35) of the tensioning screws (31) are sunk into the facing side (25) of the second body part (3).

5. Threaded ring according to Claim 4, **characterised in that** internal hexalobular head screws (31) are envisaged as tensioning screws, the screw heads (35) of which are sunk into the facing side (25) to be substantially flush with the said facing side (25).

## Revendications

1. Bague filetée dont le corps d'un seul tenant, pourvu d'un filetage intérieur (5), présente deux parties de corps (1 et 3) dont la première forme une bague de réglage comprenant en extrémité une surface transversale plane (11) située dans un plan radial, et dont la deuxième partie de corps (3) forme une bague de blocage de sécurité qui est reliée à la première partie de corps (1), par l'intermédiaire d'une partie de paroi (29) élastiquement flexible, en formant un interstice (15) se trouvant entre les deux parties de corps (1 et 3), et qui comprend un dispositif d'actionnement (31) au moyen duquel il est possible de régler la géométrie de l'interstice (15) en raison de la flexibilité élastique de la partie de paroi (29), la deuxième partie de corps (3), qui sert de bague de blocage de sécurité, présentant, pour former la partie de paroi (29) élastiquement flexible, une zone périphérique (21) qui par rapport à la première partie de corps (1), est réduite à un diamètre extérieur se situant sur un rayon plus petit que l'extrémité (17) radialement extérieure de l'interstice (15), cette extrémité se situant pour sa part sur un rayon plus petit que la périphérie (19) de la première partie de corps (1), et la zone périphérique (21) de diamètre réduit de la deuxième partie de corps (3) se terminant à une distance axiale de l'interstice (15), qui définit l'étendue de la partie de paroi (29) flexible, dans la direction axiale, **caractérisée en ce que** la zone périphérique (21) de diamètre extérieur réduit de la deuxième partie de corps (3), est formée par une surface périphérique cylindrique circulaire, qui s'étend de manière continue, à partir du bord (23) terminal adjacent à la surface frontale (25) de la deuxième partie de corps (3), jusqu'à la partie de paroi (29) flexible.

2. Bague filetée selon la revendication 1, **caractérisée en ce que** le dispositif d'actionnement comprend plusieurs moyens de serrage (31) permettant une modification de la largeur de l'interstice (15), en des endroits sélectionnés.

3. Bague filetée selon la revendication 2, **caractérisée en ce qu'**en guise de moyens de serrage sont prévues des vis de serrage (31) qui sont agencées de manière régulière sur un cercle de division coaxial, traversent l'interstice (15) parallèlement à l'axe, et s'appuient avec leurs têtes de vis (35) sur la deuxième partie de corps (3).

4. Bague filetée selon la revendication 3, **caractérisée en ce que** les têtes de vis (35) des vis de serrage (31) sont logées de manière encastrée dans la surface frontale (25) de la deuxième partie de corps (3).

5. Bague filetée selon la revendication 4, **caractérisée en ce qu'**en guise de vis de serrage sont prévues des vis à tête six pans creux (31) dont les têtes de vis (35) encastrées ou noyées dans la surface frontale (25), arrivent sensiblement au ras de la surface frontale (25).
